# EUROPEAN PATENT SPECIFICATION

(11) **EP 4 053 490 B1**
(45) Date of publication and mention of the grant of the patent: **03.05.2023**
(21) Application number: 21160354.3
(22) Date of filing: 02.03.2021
(51) Int. Cl.: F41H 5/04

(54) **ANTI-BALLISTIC PLATE AND A METHOD OF MANUFACTURING AN ANTI-BALLISTIC PLATE**
ANTIBALLISTISCHE PLATTE UND VERFAHREN ZUR HERSTELLUNG EINER ANTIBALLISTISCHEN PLATTE
PLAQUE ANTI-BALISTIQUE ET PROCÉDÉ DE FABRICATION D'UNE PLAQUE ANTI-BALISTIQUE

(43) Date of publication of application: 07.09.2022
(73) Proprietor: NFM AS, 1400 Ski (NO)
(72) Inventor: Horvei, Toivo, 1423 Ski (NO)
(74) Representative: Bryn Aarflot AS

(56) References cited:
- US-A1- 2013 295 805
- US-A1- 2016 178 327
- US-B2- 8 920 909
- US-B2- 9 091 512

## Description

### Technical Field

The present invention relates to a fiber-reinforced composite plate used for ballistic protection. The invention also relates to a novel method of producing such a plate.

### Background Art

Within the field of ballistic protection, it is well known to use fiber-reinforced composite plate materials. Examples of such plate materials include chest and back plates carried on the torso of a person, vehicle protection plates, and helmets, such as military helmets.

For example, publication US6389594 describes manufacture of such anti-ballistic plates.

Publication US8920909 discloses a process for the manufacture of an anti-ballistic article, using a stack of sheets having anti-ballistic fibers. The disclosed process aims to obtain articles that can endure high temperatures during use and storage.

Furthermore, publications US20160178327, US20130295805 and US9091512 also present solutions for manufacturing anti-ballistic articles.

### Summary of invention

According to a first aspect of the present invention as defined by claim 1, there is provided a method of manufacturing an anti-ballistic plate for ballistic protection. The method comprises the following steps:
a) providing a stack of fiber layers of parallel arranged polymer fibers, wherein there are voids between the fibers of the respective fiber layers, and wherein the average thickness of said fiber layers corresponds to a thickness resulting from at least two rows of fibers, wherein the fibers are HMWPE or UHMWPE fibers, wherein said voids contain at least 6 % compressible gas or vacuum and a maximum of 3 % matrix material or binding agent;
b) heating the stack to a temperature of above 80 °C;
c) compressing the stack and thereby permanently deforming the fibers as fibers abut against adjacent fibers, thereby reducing the volume of said voids to less than 3 % of the volume of said fiber layers; and
d) cooling the stack while under the compression during step c);
wherein step c) comprises compressing the stack using a pressure of at least 200 bar.

The voids are spaces between the adjacent fibers. The voids will at least comprise a compressible gas or vacuum, such that the volume of the voids can be reduced during the compression step.

With the term plate is understood a plate material having substantially parallel opposite faces. Such a plate material can in some embodiments be curved, such as when used as the main body of a helmet.

Preferably, the fibers used to provide the stack in step a) has a circular cross section.

The anti-ballistic plate manufactured using the method of the present invention differs from known anti-ballistic plates at least in that the fiber material constitutes a relatively larger volume of the plate, and in that the fibers are permanently deformed.

In an embodiment of the above method, step c) can comprise compressing the stack using a pressure of at least 500 bar, 800 bar, more preferably more than 1000 bar, or even 2000 bar.

Preferably step b) and step c) can comprise arranging the stack inside the pressure chamber of a hydroclave. The pressure chamber would then be liquid filled, and the liquid would be pressurized.

Preferably, step b) can comprise heating the stack to a temperature above 100 °C, or even above 120 °C.

Step c) may in some embodiments comprise reducing the volume of said voids to less than 2 % or even less than 1 % of the volume of said fiber layers.

In other embodiments, step c) can comprise reducing the volume of said voids substantially 0 % of the volume of said fiber layers.

In some embodiments, the fiber layers provided in step a) can comprise a matrix, wherein the volume of matrix in the fiber layers is less than 3 % after the compression in step c). The volume of matrix after the compression in step c) may in some embodiments be less than 2 % or even less than 1%.

According to a second aspect of the present invention as defined by claim 8, there is provided an anti-ballistic plate for ballistic protection, comprising a compressed stack of fiber layers of unidirectionally arranged fibers, wherein the fibers (1) are UHMWPE or HMWPE fibers. According to the second aspect of the invention, the fibers have a permanently compressed cross section that is different from their original cross section. Moreover, the said fibers of the fiber layers constitute at least 97 % of the volume of the fiber layers.

In some embodiments of the second aspect of the invention, the said fibers of the fiber layers can constitute at least 98 % or at least 99 % of the volume of the fiber layers.

In other embodiments of the second aspect of the invention, the said fibers of the fiber layers can constitute substantially 100 % of the volume of the fiber layers.

With the term "substantially 100%" is meant that the fiber layer comprises no other material than the fibers themselves, or that the fiber layer comprises less than 0,1 % of a further material in addition to the fibers. Such an additional material could typically be a binding material / binding agent that forms a thin film or membrane between external faces of the fibers.

Advantageously, with respect to the first and second aspect of the invention, the fibers of the fiber layers have preferably been compressed from having a circular cross section to having a polygonal cross section.

When compressed due to abutment against adjacent fibers, the compressed fibers will comprise abutment faces that abuts adjacent fibers with a contact area that is larger than when in the non-compressed state.

In some embodiments the anti-ballistic plate may comprise bonds directly between adjacent fibers, which bonds are constituted by chemical bonding between the material of the adjacent fibers. In such embodiments the anti-ballistic plate can be without a matrix or binding agent interposed between the fibers.

In some embodiments, the polymer fibers can advantageously be high or ultra-high molecular weight polyethylene fibers.

With this method according to the invention, one obtains that the fibers are abutting each other with abutment faces that have a significant area. When a ballistic projectile hits the plate, the tight engagement between the adjacent fibers will immediately transfer the force from the projectile deep into the plate. The force transfer will occur both sideways as well as along the direction of the colliding projectile. As a result, a large volume of the plate will participate in the absorption of the energy of the projectile.

This contrasts with previous anti-ballistic plates, where fibers with circular cross section will slide past one another when hit. Since the fibers will not engage with each other in the same manner as with a plate according to the present invention, the impact energy from the projectile is not efficiently absorbed in the plate before the projectile has penetrated deeper into the plate material.

Another advantage of the plate according to the present invention is that since there are only small or substantially no voids between the unidirectional fibers, there is needed more energy to compress the voids further, if at all present. Moreover, since there are only small voids or substantially no voids at all, deformation of the fibers also needs more energy, as compared to the prior art anti-ballistic plates. In other words, if there is no void present, it is not possible to move a portion of a fiber into a void. Correspondingly, if the void is small, the void cannot receive a large portion of a fiber that deforms due to the projectile impact.

An even further advantage of the present invention is the following. The tensile strength of fibers, typically PE fibers as UHMWPE fibers, is significantly higher than the tensile strength of matrix materials typically used to retain the fibers in their place inside the anti-ballistic plate. Hence, by reducing the relative amount of the weaker material and increasing the amount of stronger material, the overall strength, per volume or weight, of the plate is increased.

### Detailed description of the invention

While some features of the invention have been discussed in general terms above, a non-limiting example of embodiment will be presented in the following with reference to the drawings, in which
- Fig. 1: is a schematic front view of an anti-ballistic chest plate worn by a person;
- Fig. 2: is a schematic perspective view of a fiber layer of unidirectional fibers;
- Fig. 2a: is a schematic perspective view of one row of fibers;
- Fig. 3: is a schematic cross-section view of a fiber layer of unidirectional fibers, showing circular cross section of the fibers;
- Fig. 4: is an enlarged portion of Fig. 3, depicting voids between the circular fibers;
- Fig. 5: is a schematic illustration of a stack of fiber layers of unidirectional fibers arranged inside a compression assembly;
- Fig. 6: is a schematic illustration of a fiber layer of fibers arranged inside a sealed and flexible bag;
- Fig. 7: is a schematic illustration of a fiber layer of unidirectional fibers after compression and deformation of the fibers;
- Fig. 8a: is an enlarged portion of Fig. 7, depicting reduced voids between the fibers;
- Fig. 8b: is an enlarged cross section view corresponding to Fig. 8a, however depicting a compressed fiber layer where there is substantially no voids remaining after compression;
- Fig. 9: is a principle perspective view of a stack of fiber layers of unidirectional fibers before deformation;
- Fig. 10a: is a computer tomography (CT) image of one layer of fibers after preparation according to the present invention; and
- Fig. 10b: is an edited version of the image shown in Fig. 10a.

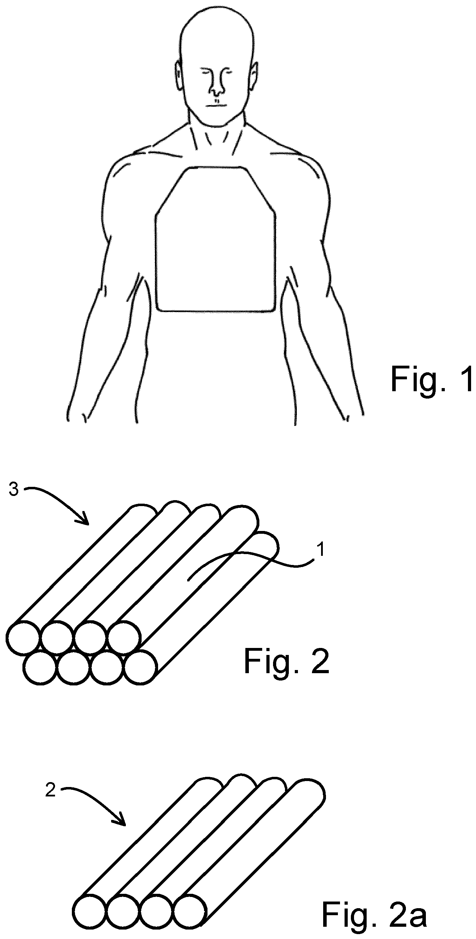

Fig. 1 schematically illustrates a composite anti-ballistic plate 100 according to the invention, in the form of a protective chest plate carried by a soldier. The plate 100 could also be used for other type of ballistic protection. For instance, the plate could constitute the main body of a protective helmet, a protective part of a vehicle, or a hand-held protective shield such as used by riot police.

Fig. 2 schematically shows a fiber layer 3 of unidirectional fibers 1. The fibers 1 are ultra-high molecular weight polyethylene (UHMWPE) fibers. As shown in Fig. 2, the fibers have the same direction (unidirectional - UD) and are arranged in a fiber layer 3. The fiber layer 3 has a plurality of fibers 1 arranged on top of each other with the same orientation. The fibers 1 will constitute a part of the plate 100 according to the invention. There will be arranged several fiber layers 3 of fibers 1 in one stack 4. Moreover, as is known in the art, several fiber layers 3 can be arranged with alternating directions. For instance, some fiber layers 3 may typically be directed 90 degrees with respect to other fiber layers 3.

The fiber layer 3 shown in Fig. 2 comprises two rows 2 of fibers. One row 2 of fibers is depicted in Fig. 2a. Thus, the thickness of the fiber layer 3 shown in Fig. 2 corresponds to the thickness of two rows 2 of fibers 1 arranged unidirectionally and on top of each other.

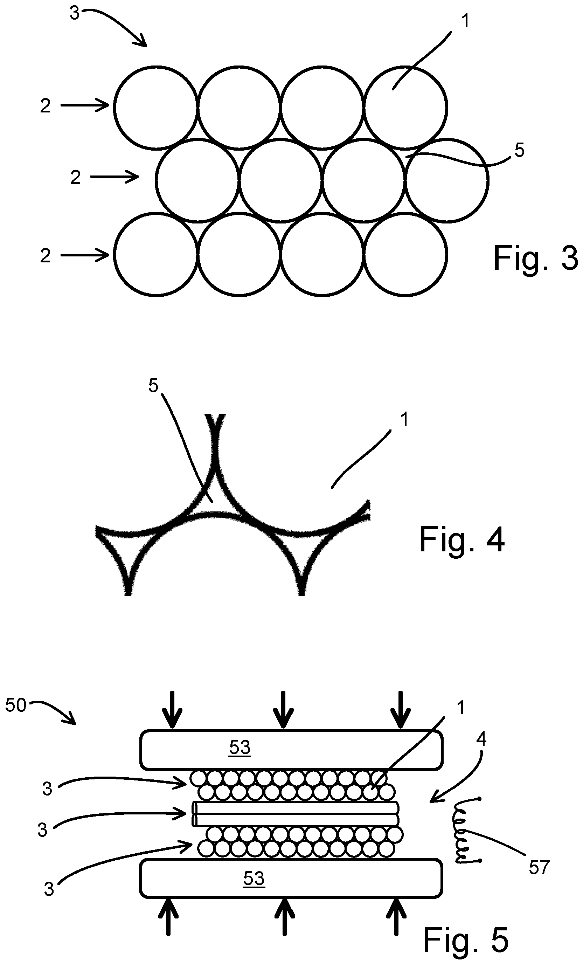

Fig. 3 shows a fiber layer 3 of unidirectional fibers 1 with a cross section side view, illustrating the circular shape of the fibers 1. This fiber layer 3 comprises three rows 2 of fibers. As shown in Fig. 3, the unidirectional fibers 1 abut against each other and form voids 5 between them.

Fig. 4 is an enlarged portion of Fig. 3, showing the void 5 between the circular fibers 1.

It will be appreciated that the schematic illustrations shown in Fig. 2, Fig. 2a, and Fig. 3 are somewhat theoretical. In a real-life embodiment, the fibers 1 may not be arranged as systematically and orderly as shown in these drawings.

However, many of the fibers 1 will exhibit the configuration shown herein.

Furthermore, it will be appreciated that in many embodiments, each layer 3 of fibers may comprise more than two or three rows 2 of fibers.

The plate 100 according to the invention is made by compressing the fibers 1 at an elevated temperature. The fibers 1 will then take another shape than what is shown in the drawings discussed above.

Fig. 5 schematically depicts a compression assembly 50 for performing such compression. The compression assembly 50 comprises two compression plates 53, between which the fiber layers 3 are arranged. The fiber layers 3 are assembled into a stack 4. The compression plates 53 are moved towards each other, such that the fiber layers 3 of the stack 4 are compressed and permanently deformed.

The compression assembly 50 further comprises a heating means 57, schematically shown in Fig. 5. The heating means 57 is used to provide a desired temperature in the stack 4. The heating means 57 can be of various types, for instance an electric coil, or a fluid-conducting coil carrying a warm gas or liquid.

In some embodiments, the heating may be provided by heating the liquid inside a hydroclave.

It will be apparent for the skilled person that other ways compressing the fiber layers 3 of fibers 1 are also possible. Possible means for fiber compression includes for instance an isostatic press, autoclave, hydroclave, uniaxial press, and a hydraulic press.

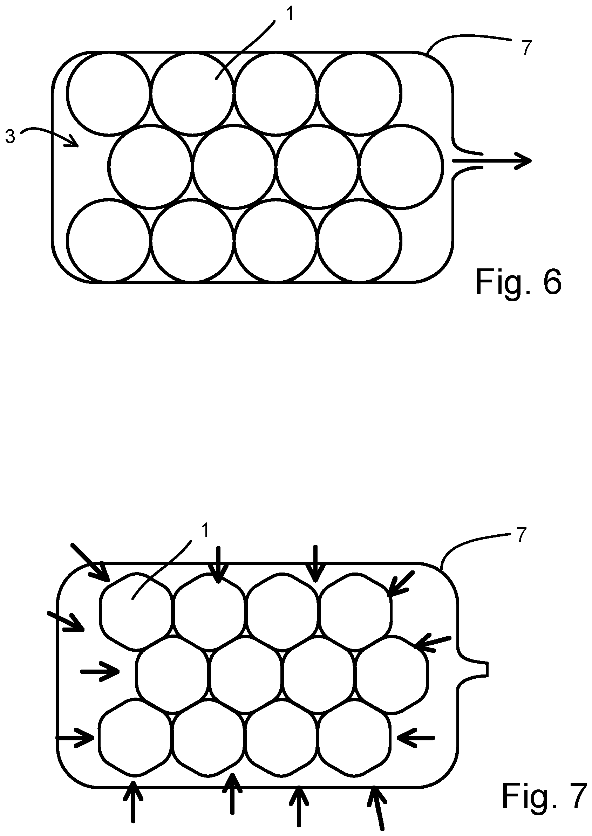

Fig. 6 schematically illustrates an alternative way of compressing the fibers 1, i.e. without the use of a compression assembly as shown in Fig. 5. For illustrational purpose, only one fiber layer 3 of unidirectional fibers 1 are shown in Fig. 6. The fiber layer 3 is placed inside a sealed and flexible bag 7. The flexible bag 7 is then arranged in a pressure chamber (not shown), such as a hydroclave. When in the pressure chamber, external pressure will provide compressive forces on the fibers 1. A means for temperature control is used for elevating the temperature of the fibers 1.

As is common in the art, one can remove gas from the flexible bag before placing the stacks 3 in the pressure chamber. By removing the gas from the flexible bag 7, one also removes gas that is present in the voids 5.

Fig. 7 depicts the fiber layer 3 of fibers 1 after the compression of the fibers 1. In addition to application of the compressive forces, the fibers 1 were heated during compression. It will be understood that the flexible bag 7 would be pressed against the outermost fibers 1 in a realistic embodiment, while in Fig. 7 the flexible bag 7 is merely schematically depicted.

Preferably, the compression is maintained during cooling of the stack 4 of fibers layers 3.

The combination of compressive forces on the fibers 1 and the elevated temperature, has caused the fibers to permanently deform due to abutment against each other. As can be seen in the schematic illustration of Fig. 7, the fibers 1 have adopted a non-circular or polygonal cross section. This shape is the result of the adjacent fibers 1 pressing against each other while the elevated temperature has allowed the material of the fibers 1 to permanently deform.

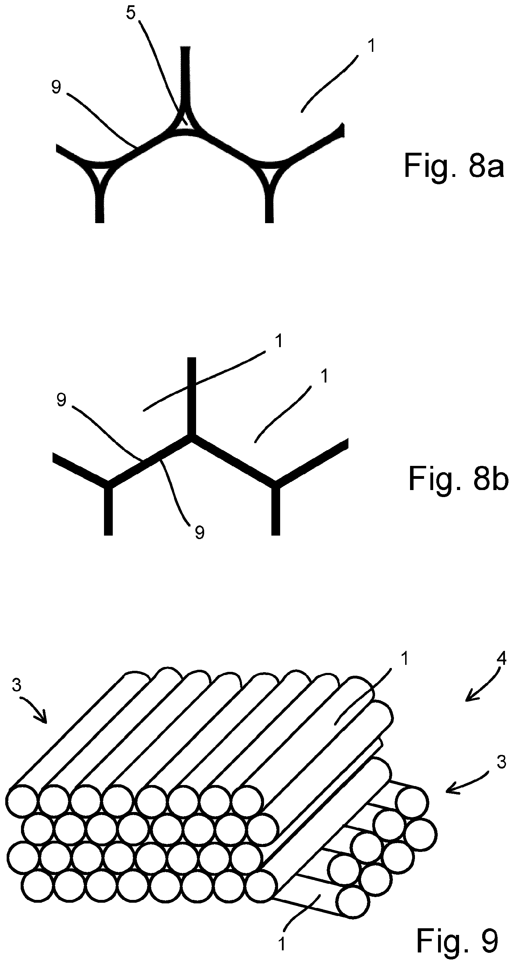

As shown in Fig. 8a, which is an enlarged view of a portion of Fig. 7, the voids 5 between the fibers 1 are significantly smaller than before the deformation (cf.

Fig. 4). Furthermore, the contact area between adjacent fibers 1 has increased. The deformation of the fibers 1 has provided abutment faces 9, where fibers 1 abut adjacent fibers 1 with faces that have a substantial area.

As briefly discussed above, the fibers 1 in the fiber layer 3 are simultaneously heated and compressed to provide the deformation of the fibers 1. In the shown embodiment, the peripheral cross section shape is deformed from a circular shape to a shape where parts of the circumference are abutting adjacent fibers 1 and thus take a straighter shape. I.e. the abutment faces 9 are substantially flat. Typically, as shown in Fig. 8a, adjacent the voids 5 the peripheral shape will have rounded corners. Between the rounded corners there will typically be abutting straight parts of adjacent and abutting fibers 1. Typically, the cross sections of the fibers 1 will take a polygonal shape.

While the embodiment shown in Fig. 8a still shows visible voids 5 after the heating and compression steps, it is possible to compress the fibers 1 such that substantially no void 5 remains.

In some embodiments according to the invention, a matrix (binder) is arranged to contribute in attaching the fibers 1 to neighboring fibers. Since such a matrix will occupy a volume of the produced anti-ballistic plate 100, the amount of matrix will affect the possible reduction of void volume during compression. Thus, if the produced anti-ballistic plate 100 comprises a compressed stack of fiber layers 3 that comprises 3 % of the stack volume, the voids 5 will occupy at least 3 % of the compressed stack volume.

A comparison between Fig. 4 and Fig. 8a illustrates the reduced void 5 between the fibers 1 after the deformation process (compression and heating) has been performed. To allow for this reduction of void 5, a possible matrix material cannot fill up the void 5 between the fibers 1 before the deformation process. Instead, between the fibers 1 there must be vacuum or compressible gas, so that the fibers 1 can reshape and reduce the voids 5 between them.

In a fiber layer 3 of circular fibers 1, where the fibers 1 are perfectly and unidirectionally stacked as shown e.g. in Fig. 3, the voids 5 between the fibers 1 will theoretically occupy approximately 9 % of the total volume of the fiber layer 3. Thus, if the voids 5 shall be compressed to a final volume that constitutes 3 % of the compressed stack volume, the voids 5 must contain at least 6 % compressible gas or vacuum and maximum 3 % matrix material or binding agent.

In embodiments where the compressed fiber layers 3 are substantially without voids 5, the fibers 1 may be attached to neighboring fibers 1 due to bonding. I.e. by application of pressure and temperature, the fibers 1 may bond to each other even without a matrix or a binding agent being present.

Furthermore, for embodiments where the compressed fiber layers 3 constitute more than 99,9 % of the volume of the fiber layer 3, the volume of binding agent or matrix will be below 0,1 % of the volume of the compressed fiber layers 3.

In such embodiments, a binding agent or matrix may be present in any remaining void 5 and/or as a layer between the abutting abutment faces 9 of the deformed fibers 1 (cf. Fig. 8a).

Fig. 8b is a cross section view corresponding to Fig. 8a, however depicting an embodiment where there are substantially no remaining voids. In such embodiments, a binding agent may form a layer between the abutment faces 9. It will be understood that in a real-life application, all the fibers 1 will not take the theoretically perfect configuration as shown in the drawings.

In places of the fiber layers 3 where the fibers 1 have not been configured as intended, certain voids may occur while the voids will be substantially removed at locations where the fibers 1 have the intended configuration.

Fig. 9 schematically depicts a stack 4 of two fiber layers 3 of unidirectional fibers 1. As appears from Fig. 9, the cross sections of the fibers 1 are circular and not yet compressed. The shown upper fiber layer 3 has four rows 2 of fibers, while the lower fiber layer 3 has two rows 2 of fibers. It will be understood that the anti-ballistic plate 100 may comprise more rows 2 of fibers in each fiber layer 3. Moreover, the anti-ballistic plate 100 may comprise more fiber layers 3 than what is shown in the schematic illustrations discussed above.

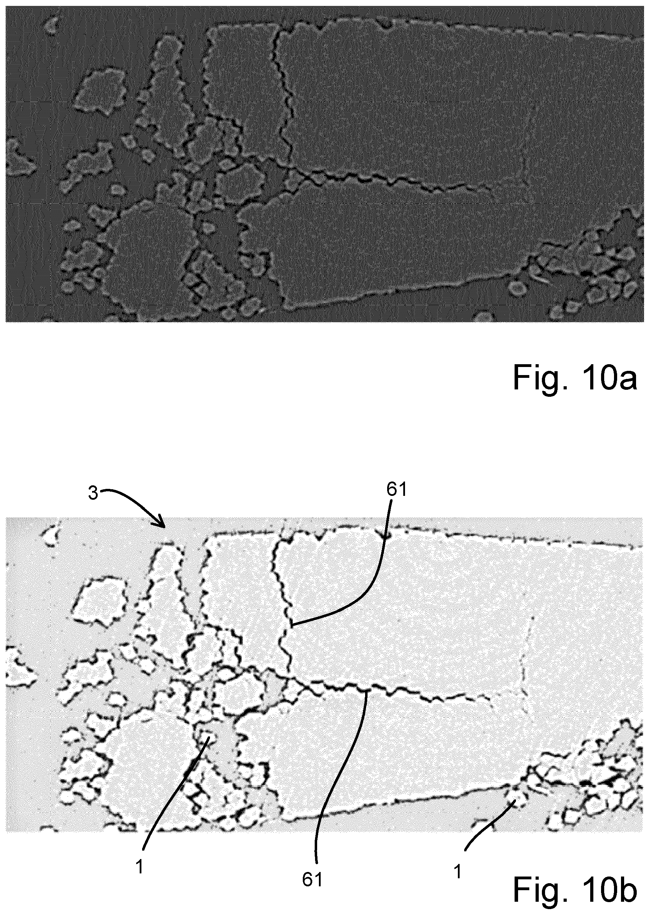

Fig. 10a is a CT micro image of a portion of a fiber layer 3 of several rows of fibers. Fig. 10b is an edited version of Fig. 10a, included for better visibility.

The fibers 1 originally had a circular cross section, such as shown schematically in Fig. 2. The fiber layer 3 has been compressed according to the discussion above, such that the circular cross section of the fibers 1 has been changed into more polygon-like cross sections. I.e. their cross sections result from compression forces from adjacent fibers 1.

In this embodiment, the fiber layer 3 was compressed with a pressure of about 1000 bar and a temperature of about 132 °C, for about 10 minutes. After the heating period, the fiber layer 3 was cooled while still under pressure.

The view of the compressed layer 3 shown in Fig. 10a and Fig. 10b is of a portion of the layer 3 where some fibers 1 are totally or partially detached from the main part of the layer 3. In this manner, the polygonal shape of the fiber cross sections is revealed.

The average thickness of the shown layer 3 probably corresponds to about 25 - 30 rows 2 of fibers.

In a portion of the layer 3, some cracks 61 are shown. Notably, the cracks 61 have a cornered or edged configuration, following the perimeter of the deformed fibers 1.

Notably, there are no visible voids in this image and the compressed fiber layer 3 appears homogenous, except of course the parts that have detached from the main portion of the fiber layer 3.

The fibers 1 used with the present invention, preferably made of UHMWPE, can typically have a diameter within the range of 10 to 30 µm, preferably 12 to 25 µm.

## Claims

1. A method of manufacturing an anti-ballistic plate (100) for ballistic protection, comprising the following steps:
a) providing a stack (4) of fiber layers (3) of parallel arranged polymer fibers (1), wherein there are voids (5) between the fibers of the respective fiber layers, and wherein the average thickness of said fiber layers (3) corresponds to a thickness resulting from at least two rows (2) of fibers, wherein the fibers are HMWPE or UHMWPE fibers, wherein said voids contain at least 6 % compressible gas or vacuum and a maximum of 3 % matrix material or binding agent;
b) heating the stack (4) to a temperature of above least 80 °C;
c) compressing the stack (4) and thereby permanently deforming the fibers (1) as fibers abut against adjacent fibers, thereby reducing the volume of said voids (5) to less than 3 % of the volume of said fiber layers (3);
d) cooling the stack (4) while under compression;
wherein step c) comprises compressing the stack using a pressure of at least 200 bar.

2. A method according to claim 1, wherein step c) comprises compressing the stack using a pressure of at least 500 bar, at least 800 bar, or at least 1000 bar, or even at least 2000 bar.

3. A method according to claim 1 or claim 2, wherein step b) and step c) comprises arranging the stack (4) inside the pressure chamber of a hydroclave.

4. A method according to any one of the preceding claims, wherein step b) comprises heating the stack (4) to a temperature above 120 °C.

5. A method according to any one of the preceding claims, wherein step c) comprises reducing the volume of said voids (5) to less than 2 % or even less than 1 % of the volume of said fiber layers (3).

6. A method according to any one of claims 1 to 4, wherein step c) comprises reducing the volume of said voids (5) to substantially 0 % of the volume of said fiber layers (3).

7. A method according to one of claims 1 to 5, wherein the fiber layers (3) provided in step a) comprises a matrix, wherein the volume of matrix in the fiber layers (3) is less than 3 % after the compression in step c).

8. An anti-ballistic plate (100) for ballistic protection, comprising a compressed stack (4) of fiber layers (3) of unidirectionally arranged fibers (1), wherein the fibers (1) are UHMWPE or HMWPE fibers,
**characterized in that**
- the fibers (1) have a permanently compressed cross section that is different from their original cross section;
- the said fibers (1) of the fiber layers (3) constitute at least 97 % of the volume of the fiber layers (3).

9. An anti-ballistic plate (100) according to claim 8, wherein
- the said fibers (1) of the fiber layers (3) constitute at least 98 % or at least 99 % of the volume of the fiber layers (3).

10. An anti-ballistic plate (100) according to claim 8, wherein
- the said fibers (1) of the fiber layers (3) constitute substantially 100 % of the volume of the fiber layers (3).

## Patentansprüche

1. Verfahren zur Herstellung einer antiballistischen Platte (100) für den ballistischen Schutz, umfassend die folgenden Schritte:
a) Bereitstellen eines Stapels (4) von Faserschichten (3) aus parallel angeordneten Polymerfasern (1), wobei zwischen den Fasern der jeweiligen Faserschichten Hohlräume (5) vorhanden sind, und wobei die durchschnittliche Dicke der Faserschichten (3) einer Dicke entspricht, die wenigstens zwei Reihen (2) von Fasern entspricht, wobei die Fasern HMWPE- oder UHMWPE-Fasern sind, wobei die Hohlräume mindestens 6 % komprimierbares Gas oder Vakuum und maximal 3 % Matrixmaterial oder Bindemittel enthalten;
b) Erhitzen des Stapels (4) auf eine Temperatur von über 80 °C;
c) Komprimieren des Stapels (4) und dadurch dauerhaftes Verformen der Fasern (1), wenn Fasern an benachbarte Fasern stoßen, wodurch das Volumen der Hohlräume (5) auf weniger als 3 % des Volumens der Faserschichten (3) reduziert wird;
d) Kühlen des Stapels (4) unter Druck;
wobei Schritt c) das Komprimieren des Stapels mit einem Druck von mindestens 200 bar umfasst.

2. Verfahren nach Anspruch 1, wobei Schritt c) das Komprimieren des Stapels mit einem Druck von mindestens 500 bar, mindestens 800 bar oder mindestens 1.000 bar oder sogar mindestens 2.000 bar umfasst.

3. Verfahren nach Anspruch 1 oder Anspruch 2, wobei Schritt b) und Schritt c) das Anordnen des Stapels (4) in der Druckkammer eines Hydroklaven umfasst.

4. Verfahren nach einem der vorhergehenden Ansprüche, wobei Schritt b) das Erhitzen des Stapels (4) auf eine Temperatur über 120 °C umfasst.

5. Verfahren nach einem der vorhergehenden Ansprüche, wobei Schritt c) die Reduzierung des Volumens der Hohlräume (5) auf weniger als 2 % oder sogar weniger als 1 % des Volumens der Faserschichten (3) umfasst.

6. Verfahren nach einem der Ansprüche 1 bis 4, wobei Schritt c) die Reduzierung des Volumens der Hohlräume (5) auf im Wesentlichen 0 % des Volumens der Faserschichten (3) umfasst.

7. Verfahren nach einem der Ansprüche 1 bis 5, wobei die im Schritt a) bereitgestellten Faserschichten (3) eine Matrix umfassen, wobei das Volumen der Matrix in den Faserschichten (3) nach der Kompression in Schritt c) weniger als 3 % beträgt.

8. Antiballistische Platte (100) für den ballistischen Schutz, umfassend einen komprimierten Stapel (4) von Faserschichten (3) aus unidirektional angeordneten Fasern (1), wobei die Fasern (1) UHMWPE- oder HMWPE-Fasern sind, **dadurch gekennzeichnet, dass**
- die Fasern (1) einen dauerhaft komprimierten Querschnitt haben, der sich von ihrem ursprünglichen Querschnitt unterscheidet;
- die genannten Fasern (1) der Faserschichten (3) mindestens 97 % des Volumens der Faserschichten (3) ausmachen.

9. Antiballistische Platte (100) nach Anspruch 8, wobei
- die genannten Fasern (1) der Faserschichten (3) mindestens 98 % oder mindestens 99 % des Volumens der Faserschichten (3) ausmachen.

10. Antiballistische Platte (100) nach Anspruch 8, wobei
- die genannten Fasern (1) der Faserschichten (3) im Wesentlichen 100 % des Volumens der Faserschichten (3) ausmachen.

## Revendications

1. Procédé de fabrication d'une plaque anti-balistique (100) pour une protection balistique, comprenant les étapes suivantes consistant à :
a) fournir un empilement (4) de couches de fibres (3) de fibres polymères agencées en parallèle (1), dans lequel il existe des vides (5) entre les fibres des couches de fibres respectives, et dans lequel l'épaisseur moyenne desdites couches de fibres (3) correspond à une épaisseur résultant d'au moins deux rangées (2) de fibres, dans lequel les fibres sont des fibres de HMWPE ou UHMWPE, dans lequel lesdits vides contiennent au moins 6 % de gaz compressible ou de vide et un maximum de 3 % de matériau de matrice ou d'agent de liaison ;
b) chauffer l'empilement (4) jusqu'à une température supérieure à 80°C ;
c) comprimer l'empilement (4) et déformer ainsi de manière permanente les fibres (1) lorsque les fibres viennent en butée contre des fibres adjacentes, en réduisant ainsi le volume desdits vides (5) à moins de 3 % du volume desdites couches de fibres (3) ;
d) refroidir l'empilement (4) lorsqu'il est sous compression ;
dans lequel l'étape c) comprend une compression de l'empilement en utilisant une pression d'au moins 200 bars.

2. Procédé selon la revendication 1, dans lequel l'étape c) comprend une compression de l'empilement en utilisant une pression d'au moins 500 bars, d'au moins 800 bars, ou d'au moins 1 000 bars, ou même d'au moins 2 000 bars.

3. Procédé selon la revendication 1 ou la revendication 2, dans lequel l'étape b) et l'étape c) comprennent un agencement de l'empilement (4) à l'intérieur de la chambre de pression d'un hydroclave.

4. Procédé selon l'une quelconque des revendications précédentes, dans lequel l'étape b) comprend un chauffage de l'empilement (4) à une température supérieure à 120°C.

5. Procédé selon l'une quelconque des revendications précédentes, dans lequel l'étape c) comprend une réduction du volume desdits vides (5) à moins de 2 %, voire moins de 1 %, du volume desdites couches de fibres (3).

6. Procédé selon l'une quelconque des revendications 1 à 4, dans lequel l'étape c) comprend une réduction du volume desdits vides (5) à sensiblement 0 % du volume desdites couches de fibres (3).

7. Procédé selon l'une des revendications 1 à 5, dans lequel les couches de fibres (3) prévues à l'étape a) comprennent une matrice, dans lequel le volume de la matrice dans les couches de fibres (3) est inférieur à 3 % après la compression à l'étape c).

8. Plaque anti-balistique (100) pour protection balistique, comprenant un empilement comprimé (4) de couches de fibres (3) de fibres agencées de manière unidirectionnelle (1), dans laquelle les fibres (1) sont des fibres de UHMWPE ou HMWPE,
**caractérisée en ce que**
- les fibres (1) présentent une section transversale comprimée de façon permanente qui est différente de leur section transversale d'origine ;
- lesdites fibres (1) des couches de fibres (3) constituent au moins 97 % du volume des couches de fibres (3).

9. Plaque anti-balistique (100) selon la revendication 8, dans laquelle
- lesdites fibres (1) des couches de fibres (3) constituent au moins 98 % ou au moins 99 % du volume des couches de fibres (3).

10. Plaque anti-balistique (100) selon la revendication 8, dans laquelle
- lesdites fibres (1) des couches de fibres (3) constituent sensiblement 100 % du volume des couches de fibres (3).
